# FASCICULE DE BREVET EUROPEEN

(11) **EP 0 851 840 B1**
(45) Date de publication et mention de la délivrance du brevet: **28.07.1999**
(21) Numéro de dépôt: 96931128.1
(22) Date de dépôt: 13.09.1996
(51) Int. Cl.: C01F 17/00, C08K 3/30, C09C 1/00

(54) **SULFURE DE TERRE RARE ET D'ALCALIN, SON PROCEDE DE PREPARATION ET SON UTILISATION COMME PIGMENT COLORANT**
ALKALIMETALLENTHALTENDES SELTENERDENSULFID, VERFAHREN ZUR HERSTELLUNG DESSELBEN UND SEINE ANWENDUNG ALS FARBPIGMENT
RARE-EARTH AND ALKALI SULPHIDE, METHOD FOR PREPARING SAME AND USE THEREOF AS A PIGMENT

(30) Priorité: 18.09.1995 FR 9510893
(43) Date de publication de la demande: 08.07.1998
(73) Titulaire: RHODIA CHIMIE, 92408 Courbevoie Cédex (FR)
(72) Inventeur: AUBERT, Maryline, F-17540 Angliers (FR); MACAUDIERE, Pierre, F-92600 Asnières-sur-Seine (FR)
(74) Mandataire: Dubruc, Philippe
(86) Numéro de dépôt international: FR9601418
(87) Numéro de publication internationale: WO9711031

(56) Documents cités:
- EP-A- 0 545 746
- EP-A- 0 620 254
- EP-A- 0 628 608
- EP-A- 0 680 930
- DE-A- 2 126 190
- ED: H. BERGMANN: "Gmelin handbook of inorganic chemistry; vol. C7: Sc,Y,La-Lu Rare earth elements" 1983 , SPRINGER-VERLAG , BERLIN XP002004937 voir page 597 - page 605

## Description

La présente invention conceme un sulfure de terre rare et d'alcalin, son procédé de préparation et son utilisation comme pigment colorant.

Les pigments minéraux de coloration sont déjà largement utilisés dans de nombreuses industries notamment dans celles des peintures, des matières plastiques et des céramiques. Dans de telles applications, les propriétés que sont, entre autres, la stabilité thermique et/ou chimique, la dispersabilité (aptitude du produit à se disperser correctement dans un milieu donné), la couleur intrinsèque, le pouvoir de coloration et le pouvoir opacifiant, constituent autant de critères particulièrement importants à prendre en considération dans le choix d'un pigment convenable.

Malheureusement, le problème est que la plupart des pigments minéraux qui conviennent pour des applications telles que ci-dessus et qui sont effectivement utilisés à ce jour à l'échelle industrielle, font généralement appel à des métaux (cadmium, plomb, chrome, cobalt notamment) dont l'emploi devient de plus en plus sévèrement réglementé, voire interdit, par les législations de nombreux pays, compte tenu en effet de leur toxicité réputée très élevée. On peut ainsi plus particulièrement citer, à titre d'exemples non limitatifs, le cas des pigments rouges à base de séléniure de cadmium et/ou de sulfoséléniure de cadmium, et pour lesquels des substituts à base de sulfures de terres rares ont déjà été proposés par la Demanderesse. Des compositions à base de sesquisulfures de terre rare et d'éléments alcalins ont ainsi été décrits dans EP-A-545746. Ces compositions se sont avérées être des substituts particulièrement intéressants.

Toutefois, le besoin s'est fait sentir de disposer d'une gamme encore plus large de produits de qualité pigmentaire.

L'objet de la présente invention est donc de fournir cette gamme de produits

Dans ce but, le sulfure de terre rare et d'alcalin de l'invention est caractérisé en ce qu'il répond à la formule :

ABS₂

dans laquelle A représente au moins un alcalin et B au moins une terre rare et en ce qu'il est constitué de grains de taille moyenne d'au plus 1,5µm.

Selon un autre mode de réalisation de l'invention, le sulfure est caractérisé en ce qu'il répond à la formule précédente et en ce qu'il est constitué de grains entiers de taille moyenne d'au plus 1,5µm.

Selon un troisième mode de réalisation de l'invention, le sulfure est caractérisé en ce qu'il répond à la formule précédente et en ce qu'il est constitué d'agglomérats, eux-mêmes constitués de grains de taille moyenne d'au plus 1,5µm.

L'invention concerne aussi un procédé de préparation d'un sulfure de terre rare du type précité qui est caractérisé en ce qu'on met en présence au moins un carbonate ou un hydroxycarbonate de terre rare avec au moins un composé d'un élément alcalin et on les chauffe en présence d'au moins un gaz choisi parmi le sulfure d'hydrogène ou le sulfure de carbone et, éventuellement, on désagglomère le produit obtenu.

D'autres caractéristiques, détails et avantages de l'invention apparaîtront encore plus complètement à la lecture de la description qui va suivre, ainsi que des divers exemples concrets mais non limitatifs destinés à l'illustrer.

Le sulfure de terre rare de l'invention répond à la formule générale qui a été donnée plus haut. On précise ici et pour tout le reste de la description que par terre rare on entend les éléments du groupe constitué par l'yttrium et les éléments de la classification périodique de numéro atomique compris inclusivement entre 57 et 71.

Selon un mode de réalisation particulier de l'invention, la terre rare est le cérium ou le lanthane.

Selon un autre mode de réalisation, l'alcalin est le sodium en combinaison avec le potassium ou le lithium.

A titre d'exemples de produits de l'invention, on peut citer plus particulièrement ceux de formules suivantes : KCeS₂, NaCeS₂, et plus généralement ceux de formules KCe₁₋ₓLaₓS₂ ou KₓNa₁₋ₓCeS₂,(0≤x≤1) ces derniers évoluant en couleur entre la couleur de KCeS₂ et celle de NaCeS₂.

Une caractéristique importante des sulfures de l'invention est leur granulométrie. Ces produits sont constitués de grains de taille moyenne d'au plus 1,5µm et plus particulièrement d'au plus 1µm. Pour l'ensemble de la description, les tailles données sont mesurées par granulométrie CILAS.

Selon un autre mode de réalisation de l'invention, les produits sont constitués de grains entiers de même taille moyenne. Par grain entier, on entend un grain qui n'a pas été rompu ou brisé. Des grains peuvent en effet être brisés ou rompus lors d'un broyage. Les photos en microscopie électronique à balayage du produit de l'invention permettent de montrer que les grains qui le constituent n'ont pas été brisés. Ceci est du au fait que les sulfures de l'invention sont désagglomérables, c'est à dire que s'ils ne se présentent pas directement sous forme de grains entiers, ils peuvent se présenter sous forme d'agglomérats eux-mêmes constituées de grains agglomérés et/ou légèrement frittés qui peuvent donner par désagglomération dans des conditions douces, par exemple par un broyage du type jet d'air, des grains entiers.

Le procédé de préparation des sulfures de l'invention va maintenant être décrit.

Comme on l'a vu plus haut, le procédé de l'invention consiste à mettre en présence au moins un carbonate ou un hydroxycarbonate de terre rare avec au moins un composé d'un élément alcalin et on les chauffe en présence d'au moins un gaz choisi parmi le sulfure d'hydrogène ou le sulfure de carbone et, éventuellement, on désagglomère le produit obtenu.

Il est avantageux d'utiliser un carbonate ou hydroxycarbonate de fine granulométrie, notamment de taille moyenne d'au plus 1µm.

Concernant les composés d'alcalins utilisables dans ce même procédé, on peut citer par exemple les oxydes, les hydroxydes, les sulfures ou polysulfures, les sulfates, les composés oxycarbonés tels qu'oxalates, carbonates ou acétates d'alcalins.

Le mélange initial peut, bien entendu, comprendre plusieurs composés de terres rares et/ou d'alcalins.

Les composés précités sont mis en présence dans les proportions stoechiométriques nécessaires.

Selon une variante particulière de l'invention, le carbonate ou l'hydroxycarbonate de terre rare et le composé de l'élément alcalin sont mis en présence dans l'eau de manière à former une solution ou une suspension. Le mélange ainsi obtenu est ensuite séché par atomisation, c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. A titre d'exemple, la température en début de séchage des gaz est habituellement comprise entre 200 et 300°C, celle de sortie peut varier entre 100 et 200°C.

Le mélange ainsi obtenu après séchage subit ensuite le chauffage décrit plus haut.

Le gaz sulfurant utilisé dans le procédé de l'invention peut être le sulfure d'hydrogène ou le sulfure de carbone. Selon un mode de réalisation préféré de l'invention, on utilise un mélange de ces deux gaz.

Le gaz ou le mélange de gaz sulfurant peut être mis en oeuvre avec un gaz inerte comme l'argon ou l'azote.

Le chauffage se fait habituellement à une température comprise entre 800 et 1000°C, les températures élevées favorisant l'obtention de produits phasiquement purs.

La durée du chauffage correspond au temps nécessaire pour l'obtention du sulfure désiré et cette durée est d'autant plus courte que la température est élevée.

La réaction se fait généralement avec une pression partielle du sulfure d'hydrogène et/ou du sulfure de carbone qui est comprise entre 0,1 et 1.10⁵Pa.

Enfin, le procédé peut être mis en oeuvre dans un réacteur ouvert.

Après le chauffage, on obtient un produit qui présente directement la granulométrie donnée plus haut ou qui, par simple désagglomération ou broyage doux, permet d'obtenir cette granulométrie.

Des variantes particulières des sulfures de l'invention vont maintenant être décrites.

Selon une première variante, le sulfure comprend une couche à base d'au moins un oxyde transparent, déposée à sa surface ou sa périphérie.

Pour cette variante, on pourra se référer en ce qui conceme l'oxyde transparent et le procédé de préparation à la demande de brevet français FR-A-2703999 au nom de la Demanderesse dont l'enseignement est incorporé ici.

Selon cette variante, le produit de l'invention comporte un sulfure, du type décrit plus haut, qui forme un noyau et, enrobant ce noyau, une couche périphérique d'oxyde transparent.

Bien entendu, certaines variations autour de cette structure sont possibles. En particulier, la couche périphérique enrobant le sulfure peut ne pas être parfaitement continue ou homogène. Toutefois, de préférence, les produits selon l'invention sont constitués d'une couche de revêtement uniforme et d'épaisseur contrôlée d'oxyde transparent, et ceci de manière à ne pas altérer la couleur originelle du sulfure avant enrobage.

Par oxyde transparent, on entend ici un oxyde qui, une fois déposé sur le sulfure sous la forme d'une pellicule plus ou moins fine, n'absorbe que peu ou pas du tout les rayons lumineux dans le domaine du visible, et ceci de manière à ne pas ou peu masquer la couleur intrinsèque d'origine dudit sulfure. En outre, il convient de noter que le terme oxyde, qui est utilisé par commodité dans l'ensemble de la présente description, doit être entendu comme couvrant également des oxydes de type hydratés.

Ces oxydes, ou oxydes hydratés, peuvent être amorphes et/ou cristallisés.

A titre d'exemple de tels oxydes, on peut plus particulièrement citer l'oxyde de silicium (silice), l'oxyde d'aluminium (alumine), l'oxyde de zirconium (zircone), l'oxyde de titane, le silicate de zirconium ZrSiO₄ (zircon) et les oxydes de terres rares. Selon un mode préféré de réalisation de la présente invention, la couche enrobante est à base de silice. De manière encore plus avantageuse, cette couche est essentiellement, et de préférence uniquement, constituée de silice.

Un procédé de préparation des compositions à couche enrobante peut consister à mettre en présence le sulfure tel qu'il a été obtenu après le chauffage en présence de sulfure d'hydrogène et/ou de sulfure de carbone, et un précurseur de l'oxyde formant couche, et à précipiter cet oxyde. Les procédés de précipitation des oxydes et les précurseurs à utiliser sont décrits notamment dans FR-A-2703999.

Dans le cas de la silice on peut mentionner la préparation de la silice par hydrolyse d'un alkyl-silicate, en formant un milieu réactionnel par mélange d'eau, d'alcool, du sulfure qui est alors mis en suspension, et éventuellement d'une base, et en introduisant ensuite l'alkyl-silicate, ou bien encore une préparation par réaction du sulfure, d'un silicate, du type silicate alcalin, et d'un acide.

Dans le cas d'une couche à base d'alumine, on peut faire réagir le sulfure, un aluminate et un acide, ce par quoi on précipite de l'alumine. Cette précipitation peut aussi être obtenue en mettant en présence et en faisant réagir le sulfure, un sel d'aluminium et une base.

Enfin, on peut former l'alumine par hydrolyse d'un alcoolate d'aluminium.

Pour ce qui est de l'oxyde de titane, on peut le précipiter en introduisant dans une suspension aqueuse du sulfure un sel de titane d'une part tel que TiCl₄, TiOCl₂ ou TiOSO₄, et une base d'autre part. On peut aussi opérer par exemple par hydrolyse d'un titanate d'alkyle ou précipitation d'un sol de titane.

Enfin, dans le cas d'une couche à base d'oxyde de zirconium, il est possible de procéder par cohydrolyse ou coprécipitation d'une suspension du sulfure de cérium en présence d'un composé organométallique du zirconium, par exemple un alcoxyde de zirconium comme l'isopropoxyde de zirconium.

Selon une autre variante, le sulfure de l'invention peut contenir des atomes de fluor.

Pour cette variante, on pourra se référer en ce qui concerne la disposition des atomes de fluor et le procédé de préparation à la demande de brevet français FR-A-2706476 au nom de la Demanderesse dont l'enseignement est incorporé ici.

Les sulfures fluorurés peuvent, de préférence, présenter au moins l'une des caractéristiques suivantes :
- les atomes de fluor sont distribués selon un gradient de concentration décroissant de la surface au coeur desdits sesquisulfures.
- les atomes de fluor sont majoritairement répartis à la périphérie externe desdits sesquisulfures. On entend ici par périphérie exteme une épaisseur de matière mesurée à partir de la surface de la particule, de l'ordre de quelques centaines d'Angströms. On entend en outre par majoritairement que plus de 50% des atomes de fluor présents dans le sesquisulfure se trouvent dans ladite périphérie externe.
- le pourcentage en poids des atomes de fluor présents dans le sesquisulfure n'excède pas 10%, et de préférence 5%.
- les atomes de fluor sont présents sous la forme de composés fluorés ou sulfofluorés, en particulier sous la forme de fluorures de terres rares ou de sulfofluorures (thiofluorures) de terres rares.

Le procédé de préparation des produits selon cette variante consiste à mettre en contact et à faire réagir avec un agent de fluoruration, un sulfure obtenu à l'issue du chauffage avec le sulfure d'hydrogène et/ou le sulfure de carbone.

Cette fluoration peut être opérée selon toute technique connue en soi.

En particulier, l'agent de fluoruration peut être liquide, solide ou gazeux. De préférence, on opère sous des conditions de traitement où l'agent de fluoruration est liquide ou gazeux.

A titre d'exemples d'agents fluorurants convenant pour la mise en oeuvre du traitement selon l'invention, on peut plus particulièrement citer le fluor F₂, les fluorures d'halogènes, le fluorure d'ammonium, les fluorures de gaz rares, le fluorure d'azote NF₃, le fluorure de bore BF₃, le tétrafluorométhane, l'acide fluorhydrique HF.

Dans le cas d'un traitement sous atmosphère fluorante, l'agent fluorurant peut être utilisé pur ou en dilution dans un gaz neutre, par exemple de l'azote.

Les conditions de réaction sont choisies de préférence de manière telle que ledit traitement n'induise une fluoruration qu'en surface du sulfure (conditions douces). A cet égard, la conduite d'une fluoruration jusqu'au coeur du sulfure n'apporte pas de résultats substantiellement améliorés par rapport à une fluoruration essentiellement de surface. D'une manière pratique, on peut suivre et contrôler expérimentalement le degré d'avancement de la réaction de fluoruration, par exemple en mesurant l'évolution de la prise de masse des matériaux (prise de masse induite par l'introduction progressive du fluor).

Une troisième variante des produits de l'invention concerne les produits fluorurés du type qui vient d'être décrit mais qui sont en outre encapsulés par une couche d'oxydes transparents.

Dans ce cas, on obtient ainsi un produit composite constitué plus précisément d'une part du sulfure fluoré tel qu'obtenu et défini précédemment et, d'autre part, d'une couche à base d'au moins un oxyde transparent déposée à la surface dudit sulfure et enrobant ce dernier.

Tout ce qui a été dit plus haut en ce qui concerne le procédé d'obtention d'une telle couche s'applique bien sûr ici.

On peut enfin envisager une dernière variante dans laquelle le produit comportant une couche à base d'au moins un oxyde transparent déposée à sa surface soit en outre fluoruré. Ce produit peut être obtenu en mettant en contact le sulfure obtenu à l'issue du chauffage en présence du sulfure d'hydrogène ou du sulfure de carbone, et un précurseur de l'oxyde transparent, puis en faisant précipiter cet oxyde. Dans un deuxième temps, on soumet le produit ainsi obtenu à un traitement de fluoruration du type décrit précédemment.

Les sulfures de l'invention peuvent être tout particulièrement utilisés comme pigments colorants. Ils présentent une couleur variant du jaune au marron en fonction des éléments rentrant dans leur compositions.

Ils possèdent en effet un pouvoir de coloration et un pouvoir couvrant et, de ce fait, conviennent à la coloration de nombreux matériaux, tels que plastiques, peintures et autres.

Ainsi, et plus précisément encore, ils peuvent être utilisés dans la coloration de matières plastiques qui peuvent être du type thermoplastiques ou thermodurcissables.

Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrile-butadiène-styrène (A.B.S.), les polymères acryliques notamment le polyméthacrylate de méthyle, les polyoléfines telles que le polyéthylène, le polypropylène, le polybutène, le polyméthylpentène, les dérivés cellulosiques tels que par exemple l'acétate de cellulose, l'acéto-butyrate de cellulose, l'éthylcéllulose, les polyamides dont le polyamide 6-6.

Concernant les résines thermodurcissables pour lesquelles les sulfures selon l'invention conviennent également, on peut citer, par exemple, les phénoplastes, les aminoplastes notamment les copolymères urée-formol, mélamine-formol, les résines époxy et les polyesters thermodurcissables.

On peut également mettre en oeuvre les sulfures de l'invention dans des polymères spéciaux tels que des polymères fluorés en particulier le polytétrafluoréthylène (P.T.F.E.), les polycarbonates, les élastomères silicones, les polyimides.

Dans cette application spécifique pour la coloration des plastiques, on peut mettre en oeuvre les sulfures de l'invention directement sous forme de poudres. On peut également, de préférence, les mettre en oeuvre sous une forme pré-dispersée, par exemple en prémélange avec une partie de la résine, sous forme d'un concentré pâte ou d'un liquide ce qui permet de les introduire à n'importe quel stade de la fabrication de la résine.

Ainsi, les sulfures selon l'invention peuvent être incorporés dans des matières plastiques telles que celles mentionnées ci-avant dans une proportion pondérale allant généralement soit de 0,01 à 5% (ramenée au produit final) soit de 40 à 70% dans le cas d'un concentré.

Les sulfures de l'invention peuvent être également utilisés dans le domaine des peintures et lasures et plus particulièrement dans les résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones.

Généralement, les sulfures sont mis en oeuvre à raison de 5 à 30% en poids de la peinture, et de 0,1 à 5% en poids du lasure.

Enfin, les sulfures selon l'invention sont également susceptibles de convenir pour des applications dans l'industrie du caoutchouc, notamment dans les revêtements pour sols, dans l'industrie du papier et des encres d'imprimerie, dans le domaine de la cosmétique, ainsi que nombreuses autres utilisations comme par exemple, et non limitativement, les teintures, dans les cuirs pour le finissage de ceux-ci et les revêtements stratifiés pour cuisines et autres plans de travail, les céramiques et les glaçures.

Les produits de l'invention peuvent aussi être utilisés dans la coloration des matériaux à base de ou obtenu à partir d'au moins un liant minéral.

Ce liant minéral peut être choisi parmi les liants hydrauliques, les liants aériens, le plâtre et les liants du type sulfate de calcium anhydre ou partiellement hydraté.

Par liants hydrauliques, on entend les substances ayant la propriété de faire prise et de durcir après addition d'eau en formant des hydrates insolubles dans l'eau. Les produits de l'invention s'appliquent tout particulièrement à la coloration des ciments et bien entendu des bétons fabriqués à partir de ces ciments par addition à ceux-ci d'eau, de sable et/ou de graviers.

Dans le cadre de la présente invention, le ciment peut, par exemple, être du type alumineux. On entend par là tout ciment contenant une proportion élevée soit d'alumine en tant que telle soit d'aluminate soit des deux. On peut citer à titre d'exemple les ciments à base d'aluminate de calcium, notamment ceux du type SECAR.

Le ciment peut aussi être du type silicate et plus particulièrement à base de silicate de calcium. On peut donner à titre d'exemple les ciments PORTLAND et, dans ce type de ciments, les Portland à prise rapide ou très rapide, les ciments blancs, ceux résistant aux sulfates ainsi que ceux comprenant des laitiers de hauts-fourneaux et/ou des cendres volantes et/ou du méta-kaolin.

On peut aussi mentionner les ciments à base d'hémihydrate, de sulfate de calcium ainsi que les ciments magnésiens dits ciments de Sorel.

Les produits de l'invention s'utilisent aussi à la coloration des liants aériens, c'est à dire des liants durcissant à l'air libre par l'action du CO₂, du type oxyde ou hydroxyde de calcium ou de magnésium.

Les produits de l'invention s'utilisent enfin à la coloration du plâtre et des liants du type sulfate de calcium anhydre ou partiellement hydraté (CaSO₄ et CaSO₄, 1/2H₂O).

Enfin, l'invention concerne des compositions de matière colorées notamment du type plastiques, peintures, lasures, caoutchoucs, céramiques, glaçures, papiers, encres, produits cosmétiques, teintures, cuirs, revêtements stratifiés ou du type à base ou obtenu à partir d'au moins un liant minéral, qui comprennent un sulfure du type décrit ci-dessus.

Des exemples vont maintenant être donnés.

Les coordonnées chromatiques L*, a* et b* sont données dans ces exemples dans le système CIE 1976 (L*, a* et b*) tel que défini par la Commission Internationale d'Eclairage et répertorié dans le Recueil des Normes Françaises (AFNOR), couleur colorimétrique n° X08-12 (1983). Elles sont déterminées pour ce qui concerne les mesures faites sur les produits et les plastiques au moyen d'un colorimètre commercialisé par la Société Pacific Scientific. La nature de l'illuminant est le D65. La surface d'observation est une pastille circulaire de 12,5 cm² de surface. Les conditions d'observations correspondent à une vision sous un angle d'ouverture de 10°. Dans les mesures données, la composante spéculaire est exclue. Pour les mesures faites sur les peintures, le colorimètre utilisé est un Data Color et l'illuminant le C10.

### EXEMPLE 1

Cet exemple concerne la synthèse de NaCeS₂ et son utilisation comme pigment.

Une pulpe d'hydroxycarbonate de cérium micronique est séchée par atomisation (température d'entrée : 240°C, température de sortie : 110°C) en présence de carbonate de sodium en quantité telle que le rapport Na/Ce soit égal à 1.

Le produit séché est ensuite placé dans une nacelle en carbone vitreux, puis porté à 800°C pendant une heure sous balayage à l'argon, d'H₂S et de CS₂.

Après refroidissement, la poudre est simplement désagglomérée pour conduire à un produit rouge foncé, de granulométrie 0,7 micron et de coordonnées colorimétriques :
- L = 43,8
- a = 38,6
- b = 23,0
20 g du pigment ainsi synthétisé sont mélangés en cube tournant à 2 kg d'un polypropylène de référence ELTEX ® PHV 001. Le mélange est ensuite injecté à 220°C à l'aide d'une presse à injecter Arburg 350-90-220D avec un cycle de 41 s. Le moule est maintenu à la température de 35°C.

On obtient ainsi une éprouvette parallélipipédique à double épaisseur (2 et 4 mm).

On observe que le pigment se disperse bien. Les coordonnées chromatiques, mesurées sur la partie épaisse de la plaquette, sont les suivantes :
- L = 39,6
- a = 37,1
- b = 20,5

### EXEMPLE 2

Cet exemple concerne le produit fluoruré obtenu à partir de celui de l'exemple 1.

On procède à une fluoruration par voie humide en utilisant le fluorure d'ammonium, 10 g de produit sont introduits dans 100 ml d'une solution de fluorure d'ammonium (5% en masse).

Par ajout d'une solution d'ammoniaque, on porte le pH du mélange à 8 et on laisse le milieu sous agitation pendant une heure.

Le produit est ensuite filtré, puis séché dans un dessicateur sous vide.

On obtient un produit de coordonnées chromatiques améliorées :
- L = 41
- a = 41
- b = 25,6

### EXEMPLE 3

Cet exemple concerne la synthèse de KCeS₂ et son utilisation comme pigment.

Une pulpe d'hydroxycarbonate de cérium micronique est séchée par atomisation (température d'entrée : 240°C, température de sortie : 110°C) en présence de carbonate de potassium tel que le rapport K/Ce soit égal à 1.

Le produit séché est ensuite placé dans une nacelle en carbone vitreux, puis porté à 800°C pendant une heure sous balayage d'argon, d'H₂S et de CS₂.

Après refroidissement, la poudre est simplement désagglomérée pour conduire à un produit orange de granulométrie moyenne de 1,0 micron et de coordonnées colorimétriques :
- L = 63,3
- a = 34,7
- b = 71,1
20 g du pigment ainsi synthétisé sont mélangés en cube tournant à 2 kg d'un polypropylène de référence ELTEX ® PHV 001. Le mélange est ensuite injecté à 220°C à l'aide d'une presse à injecter Arburg 350-90-220D avec un cycle de 41 l/s. Le moule est maintenu à la température de 35°C.

On obtient ainsi une éprouvette parallélipipédique à double épaisseur (2 et 4 mm).

On observe que le pigment se disperse bien. Les coordonnées chromatiques, mesurées sur la partie épaisse de la plaquette, sont les suivantes :
- L = 58,8
- a = 25,2
- b = 61,1

### EXEMPLE 4

Cet exemple conceme la synthèse de K (Ce_{0,8}La_{0,2})S₂

Une pulpe d'hydroxycarbonate mixte micronique de cérium et de lanthane avec un rapport molaire de 80 - 20 est séchée par atomisation (température d'entrée : 240°C, température de sortie : 110°C) en présence de carbonate de potassium dans une quantité telle que le rapport K/Ce+La soit égale à 1.

Le précurseur ainsi synthétisé est ensuite placé dans une nacelle en carbone vitreux, puis porté à 800°C pendant une heure sous balayage d'argon, d'H₂S et de CS₂.

Après refroidissement, la poudre est simplement désagglomérée pour conduire à un pigment orange de granulométrie moyenne de 1,1 micron et de coordonnées colorimétriques :
- L = 63,3
- a = 25,7
- b = 70,6

### EXEMPLE 5

Cet exemple concerne la synthèse de K (Ce_{0,8}Dy_{0,2})S₂.

On procède de la même manière que dans l'exemple 4 en remplaçant le lanthane par le dysprosium.

On obtient un produit qui, après désagglomération, présente une granulométrie de 1,1µm et les coordonnées colorimétriques suivantes :
- L = 65,5
- a = 34,2
- b = 59,8

### EXEMPLE 6

Cet exemple concerne la synthèse de NaYbS₂.

On procède comme dans l'exemple 1 en remplaçant le cérium par l'ytterbium. On obtient un produit jaune qui, après désagglomération, présente une granulométrie de 0,95µm et les coordonnées colorimétriques suivantes :
- L = 78,9
- a = 3,8
- b = 24,0

### EXEMPLE 7

Cet exemple concerne la synthèse de KYbS₂.

On procède comme dans l'exemple 3 en remplaçant le cérium par l'ytterbium.

On obtient un produit jaune qui, après désagglomération, présente une granulométrie de 0,90µm et les coordonnées colorimétriques suivantes :
- L = 79
- a = 3,5
- b = 33,8

## Revendications

1. Sulfure de terre rare et d'alcalin, caractérisé en ce qu'il répond à la formule :
ABS₂
dans laquelle A représente au moins un alcalin et B au moins une terre rare et en ce qu'il est constitué de grains de taille moyenne d'au plus 1,5µm.

2. Sulfure de terre rare et d'alcalin, caractérisé en ce qu'il répond à la formule :
ABS₂
dans laquelle A représente au moins un alcalin et B au moins une terre rare et en ce qu'il est constitué de grains entiers de taille moyenne d'au plus 1,5µm.

3. Sulfure de terre rare et d'alcalin, caractérisé en ce qu'il répond à la formule :
ABS₂
dans laquelle A représente au moins un alcalin et B au moins une terre rare et en ce qu'il est constitué d'agglomérats, eux-mêmes constitués de grains de taille moyenne d'au plus 1,5µm.

4. Sulfure selon l'une des revendications précédentes, caractérisé en ce que B est le cérium.

5. Sulfure selon l'une des revendications précédentes, caractérisé en ce qu'il contient des atomes de fluor, de préférence distribués selon un gradient de concentration décroissant de la surface au coeur du sulfure.

6. Sulfure selon l'une des revendications précédentes, caractérisé en ce qu'il comprend une couche à base d'au moins un oxyde transparent, déposée à sa surface ou sa périphérie.

7. Procédé de préparation d'un sulfure de terre rare selon l'une des revendications 1 à 4, caractérisé en ce qu'on met en présence au moins un carbonate ou un hydroxycarbonate de terre rare avec au moins un composé d'un élément alcalin et on les chauffe en présence d'au moins un gaz choisi parmi le sulfure d'hydrogène ou le sulfure de carbone et, éventuellement, on désagglomère le produit obtenu.

8. Procédé selon la revendication 7, caractérisé en ce qu'on met en présence dans l'eau le carbonate ou l'hydroxycarbonate de terre rare avec le composé d'un élément alcalin, puis on sèche par atomisation le mélange obtenu avant le chauffage précité.

9. Procédé selon la revendication 6 ou 7, caractérisé en ce qu'on utilise un mélange de sulfure d'hydrogène et de sulfure de carbone.

10. Procédé selon l'une des revendications 7 à 9 pour la préparation d'un sulfure de terre rare selon la revendication 5 caractérisé en ce qu'on met en contact et on fait réagir avec un agent de fluoration le sulfure obtenu à l'issue du chauffage précité.

11. Procédé selon l'une des revendications 7 à 10 pour la préparation d'un sulfure de terre rare selon la revendication 6 caractérisé en ce qu'on met en contact le sulfure obtenu à l'issue du chauffage précité ou du traitement de fluoration et un précurseur de l'oxyde transparent puis on précipite l'oxyde transparent.

12. Utilisation d'un sulfure selon l'une des revendications 1 à 6 comme pigment colorant.

13. Utilisation selon la revendication 12, caractérisée en ce que le sulfure est employé comme pigment dans des matières plastiques, des peintures, des lasures, des caoutchoucs, des céramiques, des glaçures, des papiers, des encres, des produits cosmétiques, des teintures, des cuirs, des revêtements stratifiés et des matériaux à base ou obtenus à partir d'au moins un liant minéral.

14. Compositions de matière colorées notamment du type plastiques, peintures, lasures, caoutchoucs, céramiques, glaçures, papiers, encres, produits cosmétiques, teintures, cuirs, revêtements stratifiés ou du type à base ou obtenus à partir d'au moins un liant minéral, caractérisées en ce qu'elles comprennent un sulfure selon l'une quelconque des revendications 1 à 6.

## Patentansprüche

1. Sulfid der Lanthanoide und Alkalimetalle, dadurch gekennzeichnet, daß es der Formel
ABS₂
entspricht, in der A mindestens ein Alkalimetall und B mindestens ein Lanthanoid bezeichnet und daß es aus Körnern einer mittleren Korngröße von höchstens 1,5 µm besteht.

2. Sulfid der Lanthanoide und Alkalimetalle, dadurch gekennzeichnet, daß es der Formel
ABS₂
entspricht, in der A mindestens ein Alkalimetall und B mindestens ein Lanthanoid bezeichnet und daß es aus ganzen Körnern einer mittleren Korngröße von höchstens 1,5 µm besteht.

3. Sulfid der Lanthanoide und Alkalimetalle, dadurch gekennzeichnet, daß es der Formel
ABS₂
entspricht, in der A mindestens ein Alkalimetall und B mindestens ein Lanthanoid bezeichnet und daß es aus Agglomeraten besteht, die ihrerseits aus Körnern mit einer mittleren Korngröße von höchstens 1,5 µm bestehen.

4. Sulfid nach einem der vorangehenden Ansprüche, dadurch gekennzeichnet, daß B Cerium ist.

5. Sulfid nach einem der vorangehenden Ansprüche, dadurch gekennzeichnet, daß es Fluoratome enthält, die vorzugsweise gemäß einem von der Oberfläche zum Kern des Sulfids abnehmenden Konzentrationsgradienten verteilt sind.

6. Sulfid nach einem der vorangehenden Ansprüche, dadurch gekennzeichnet, daß es eine Schicht auf der Grundlage mindestens eines durchsichtigen Oxids aufweist, die auf seiner Oberfläche oder seiner Peripherie abgelagert ist.

7. Verfahren zur Herstellung eines Lanthanoidsulfids nach einem der Ansprüche 1 bis 4, daurch gekennzeichnet, daß man mindestens ein Lanthanoidcarbonat oder -hydroxycarbonat und mit mindestens einer Alkaliverbindung versetzt und sie in Anwesenheit mindestens eines der Gase Hydrogensulfid oder Schwefelkohlenstoff erhitzt und gegebenenfalls das entstandene Produkt dispergiert.

8. Verfahren nach Anspruch 7, dadurch gekennzeichnet, daß man das Lanthanoidcarbonat oder -hydroxycarbonat in Wasser mit der Alkaliverbindung versetzt und das entstandene Gemisch vor der genannten Erhitzung durch Zerstäubung trocknet.

9. Verfahren nach Anspruch 6 oder 7, dadurch gekennzeichnet, daß man ein Gemisch aus Hydrogensulfid und Schwefelkohlenstoff verwendet.

10. Verfahren nach einem der Ansprüche 7 bis 9 zur Herstellung eines Lanthanoidsulfids nach Anspruch 5, dadurch gekennzeichnet, daß man das nach Abschluß der genannten Erhitzung entstandene Sulfid mit einem Fluorierungsmittel in Kontakt und zur Reaktion bringt.

11. Verfahren nach einem der Ansprüche 7 bis 10 zur Herstellung eines Lanthanoidsulfids nach Anspruch 6, dadurch gekennzeichnet, daß man das nach Abschluß der genannten Erhitzung oder der Fluorierung entstandene Sulfid mit einer Vorstufe eines durchsichtigen Oxids in Berührung bringt und dann das durchsichtige Oxid ausfällt.

12. Verwendung eines Sulfids nach einem der Ansprüche 1 bis 6 als Farbpigment.

13. Verwendung nach Anspruch 12, dadurch gekennzeichnet, daß das Sulfid als Pigment in Kunststoffen, Farben, Lasuren, Kautschuk, Keramiken, Glasuren, Papieren, Tinten, kosmetischen Produkten, Beizen, Leder, mehrlagigen Beschichtungen und Materialien auf der Grundlage oder hergestellt aus mindestens einem anorganischen Bindemittel benutzt wird.

14. Zusammensetzungen gefärbter Materialien, insbesondere vom Typ der Kunststoffe, Farben, Lasuren, Kautschuk, Keramiken, Glasuren, Papiere, Tinten, kosmetischen Produkten, Beizen, Leder, mehrlagige Beschichtungen oder Materialien auf der Grundlage oder hergestellt aus mindestens einem anorganischen Bindemittel, dadurch gekennzeichnet, daß diese ein Sulfid nach einem der Ansprüche 1 bis 6 enthalten.

## Claims

1. Rare earth metal and alkali metal sulphide, characterized in that it corresponds to the formula:
ABS₂
in which A represents at least one alkali metal and B at least one rare earth metal and in that it is composed of grains with a mean size of at most 1.5 µm.

2. Rare earth metal and alkali metal sulphide, characterized in that it corresponds to the formula:
ABS₂
in which A represents at least one alkali metal and B at least one rare earth metal and in that it is composed of whole grains with a mean size of at most 1.5 µm.

3. Rare earth metal and alkali metal sulphide, characterized in that it corresponds to the formula:
ABS₂
in which A represents at least one alkali metal and B at least one rare earth metal and in that it is composed of agglomerates, themselves composed of grains with a mean size of at most 1.5 µm.

4. Sulphide according to one of the preceding claims, characterized in that B is cerium.

5. Sulphide according to one of the preceding claims, characterized in that it comprises fluorine atoms preferably distributed along a concentration gradient decreasing from the surface to the core of the sulphide.

6. Sulphide according to one of the preceding claims, characterized in that it comprises a layer, based on at least one transparent oxide, deposited at its surface or its periphery.

7. Process for the preparation of a rare earth metal sulphide according to one of claims 1 to 4, characterized in that at least one rare earth metal carbonate or hydroxycarbonate and at least one compound of an alkali metal element are brought together and are heated in the presence of at least one gas chosen from hydrogen sulphide or carbon disulphide and, optionally, the product obtained is deagglomerated.

8. Process according to claim 7, characterized in that the rare earth metal carbonate or hydroxycarbonate and the compound of an alkali metal element are brought together in water and then the mixture obtained is dried by atomization before the abovementioned heating.

9. Process according to claim 6 or 7, characterized in that use is made of a mixture of hydrogen sulphide and of carbon disulphide.

10. Process according to one of claims 7 to 9 for the preparation of a rare earth metal sulphide according to claim 5, characterized in that the sulphide obtained on conclusion of the abovementioned heating is brought into contact with and reacted with a fluorinating agent.

11. Process according to one of claims 7 to 10 for the preparation of a rare earth metal sulphide according to claim 6, characterized in that the sulphide obtained on conclusion of the abovementioned heating or of the fluorination treatment is brought into contact with a precursor of the transparent oxide and then the transparent oxide is precipitated.

12. Use of a sulphide according to one of claims 1 to 6 as colouring pigment.

13. Use according to claim 12, characterized in that the sulphide is employed as pigment in plastics, paints, transparent coatings, rubbers, ceramics, glazes, papers, inks, cosmetic products, dyes, leathers, laminated coatings and materials based on or obtained from at least one inorganic binder.

14. Coloured material compositions, in particular of the plastic, paint, transparent coating, rubber, ceramic, glaze, paper, ink, cosmetic product, dye, leather or laminated coating type or of the type based on or obtained from at least one inorganic binder, characterized in that they comprise a sulphide according to any one of claims 1 to 6.
